# EUROPEAN PATENT APPLICATION

(11) **EP 4 389 502 A2**
(43) Date of publication of application: **26.06.2024**
(21) Application number: 23211397.7
(22) Date of filing: 22.11.2023
(51) Int. Cl.: B60L 53/16, B60L 53/18, B60L 53/302

(54) **AUTOMOTIVE CHARGING ASSEMBLY**

(30) Priority: 01.12.2022 CH 14422022
(71) Applicant: Huber+Suhner AG, 9100 Herisau (CH)
(72) Inventor: Loser, Roger, 8610 Uster (CH); Hediger, Andreas, 8645 Rapperswil-Jona Switzerland (CH)
(74) Representative: Rentsch Partner AG

(57) **Abstract**

The present disclosure relates to a charging assembly (40) comprising a charging plug (1) and a charging cable (2) for connecting a charging station to the battery of an electric vehicle. The charging plug (1) comprises a primary plug housing (3) which comprises a first throughout opening (4) in which a first conductor end piece (5) is arranged, which is attached to the end (6) of a first conductor (7) of the charging cable (2) and comprises opposite to the first conductor (7) a first charging contact (8) extending in an axial direction (x). The charging plug (1) further comprises a second throughout opening (9) in which a second conductor end piece (10) is arranged, which is attached to the end (11) of a second conductor (12) of the charging cable (2) and comprises opposite to the second conductor (12) a second charging contact (13) being laterally spaced apart from and extending parallel to the first charging contact (8) in the axial direction (x). The first and the second conductor end piece (5, 10) each comprise at least one cooling surface (14) which are during operation exposed to a circulating cooling agent (15), which cooling surface (14) is fluidly interconnected to a respective cladding tube (16) surrounding the first or the second conductor (7, 12) for conducting the circulating cooling agent (15) along the first or the second conductor (7, 12).

## Description

### FIELD OF THE DISCLOSURE

The present disclosure relates to a charging assembly comprising a charging plug and a charging cable for connecting a charging station to the battery of an electric vehicle.

### BACKGROUND OF THE DISCLOSURE

Publications with regard to cable assemblies and charging plugs are known. Such cable assemblies are typically used for conducting high electrical currents, as for power supply for charging batteries of electrical vehicles.

DE102018112746 published on 28.11.2019 on behalf of the applicant relates to a charging station for an electric vehicle with a base, a plug with plug contacts for plugging into a compatible socket on the electric vehicle and a bendable cable which is attached to the base with a first end and is attached to the plug with a second end of the cable opposite the first. The plug is movable back and forth between a parking position and a charging position. The plug contacts of the plug point in the same spatial direction in the parking position and in the charging position. The cable and/or the plug have an internal cooling system operatively connected to the base.

EP3411883A1 published on 12.12.2018 on behalf of the applicant relates to a cable assembly comprising a cable with a cable hose and at least one conductor arranged therein. The cable hose is spaced a distance apart from the conductor forming a first interstitial space between the at least conductor and the cable hose. At least one tube for conveying of a cooling fluid, and a connector comprising at least one contact member interconnected to the at least one conductor and a chamber. Said chamber comprises a first port which is interconnected to the first interstitial space between the at least one conductor and the cable hose and

EP3667831A1 published on 17.06.2020 on behalf of Phoenix Contact E-Mobility GmbH relates to a connector part for connection to a mating connector part, comprising - a housing part having a plug-in section for plug-in connection to the mating connector part, and - at least one contact element associated with the plug-in section and having a contact section for electrical contacting with the mating connector part characterized by an interface device which is arranged on the housing part and has a carrier element with at least one electrical plug-in contact, to which the at least one contact element can be plugged in an electrically contacting manner, and a connecting device which is arranged on the carrier element and is intended for connecting at least one line core of an electrical line.

### SUMMARY OF THE DISCLOSURE

To shorten the charging time of the batteries of electric vehicles, there is a demand for higher charging currents to transfer more energy per time. When charging at a charging station, the charging current must be transferred from a power source to the battery of the electric vehicle through a charging cable and a thereto-attached charging plug. Nowadays, charging cable and charging plug typically form a charging assembly, which may be cooled to prevent overheating of the system due to electrical resistance and therefore be able to transfer more energy per time and shorten the charging cycle. Nevertheless, a cooled charging cable and charging plug requires more parts being integrated in the plug housing. In addition, higher charging currents require a more advanced monitoring of the charging operation which leads to additional components which have to be integrated. Besides charging as such, monitoring of the charging operation and the components of the charging assembly are essential. As especially the charging plugs are standardized components which have to comply with industrial norms and technical standards, the given space and dimensions are fairly limited. Charging assemblies represent critical elements of the infrastructure, as they are naturally subject to very high wear. Given the vast number of charging stations being typically installed outside and being set up sporadically, a compact and durable design of the charging plugs is demanded, which can be easily serviced and repaired onsite if necessary.

One of the difficulties in developing charging assemblies and in particular charging plugs for automotive applications is to accomplish the different critical functions, which become more and more demanding due to increase of power to be transferred and to accommodate the components in a handy plug housing. A further aspect is to provide a charging plug for charging assemblies, which is durable against outer influence such as mechanical impact due to fall on the ground and low temperatures during winter an easily serviceable.

A charging assembly according to the present disclosure comprises a charging plug and a charging cable for connecting a charging station to the battery of an electric vehicle. The charging assembly typically comprises a charging plug, which is typically arranged at, and interconnected to, the end of a typically liquid cooled charging cable. In a preferred variation, the charging plug has a shell like design with a primary plug housing (inner housing), which houses for charging relevant parts of the charging plug. The primary plug housing may be at least partially encompassed by a secondary plug housing (outer housing) which has the primary purpose to protect the primary plug housing from outside influences. The secondary plug housing particularly protects the primary plug housing from mechanical impacts and vandalism. In a preferred variation, the secondary plug housing is easily replaceable in the case of damage. Depending on the field of application and design, the secondary plug housing can be avoided and/or replaced by other protective means, which cover the primary plug housing only partially.

To enable access to the primary plug housing and onsite maintenance for changing components of the charging plug, the secondary plug housing may comprise two half-shells forming the outer contour of the charging plug. A thereto-connected interface element can preferably be changed without the need to disassemble the primary plug housing. If appropriate, the interface element can be foreseen which encompasses and protects the sensitive charging contacts and other contacts as described hereinafter. The interface element may form part of the secondary plug housing. It is preferably designed in a manner such that it can be easily replaced in case of damage. In a preferred variation the interface element is screwed to the secondary plug housing in a manner such that it can be replaced without the need to disassemble electric components like the charging plugs. The primary plug housing is preferably encompassed by the two half-shells which can be assembled along a parting plane. To prevent unwanted access to the core components of the charging plug, the half-shells can be covered by a cover shell, which hides the connection elements of the secondary plug housing. Preferably screws are used as connection elements, which should not be visible/easily accessible to prevent vandalism.

The primary plug housing preferably consists of injection-molded parts. If appropriate, it may comprise several compartments e.g. for housing electronic components and the charging elements. For automotive charging applications, typically two charging contacts are needed. The charging contacts are each interconnected to a conductor, which is usually guided through and forming part of the charging cable. Automotive charging plugs need to combine electronic components, the charging contacts and a cooling system in a compact design which is nevertheless assembly friendly to be maintained onsite. To avoid axial loads, which occur especially when the operator connects or disconnects the charging plug form or to a vehicle, being applied to the conductors and/or wiring of the charging cable, a strain relief means can be arranged within the charging plug, interconnecting the charging plug to the charging station. The strain relief means can be either attached to primary and/or secondary housing or to one of the conductors.

In a preferred variation, the charging plug comprises a primary plug housing, which comprises a first throughout opening in which a first conductor end piece is arranged. The first conductor end piece is attached to the end of a first conductor of the charging cable. The first conductor end piece can comprise opposite to the first conductor a first charging contact, which extends in an axial direction. The primary plug housing further comprises a second throughout opening in which a second conductor end piece is arranged. The second conductor end piece is attached to the end of a second conductor of the charging cable. The second conductor end piece can comprise opposite to the second conductor a second charging contact, which is laterally spaced apart from and usually extends parallel to the first charging contact in the axial direction. Depending on the design, the first and the second charging contacts can be integrally formed with the first and the second conductor end piece. Alternatively or in addition, the first and the second conductor end pieces may comprise an interface for the first and the second charging contact to be attached as a separate part to the first and or the second conductor end piece. The first and the second conductor are typically attached to the first and the second conductor end pieces. The first and the second conductor end piece may comprise a receiving space for receiving the end of the respective conductor. For establishing an electrical connection between conductor and the conductor end piece, the conductor end piece may be attached to the conductor, e.g. by crimping.

To obtain a compact design of the overall charging plug, the primary plug housing is typically the core element of the charging plug. The first and the second throughout openings can be designed as essentially tubular openings extending from a first end to a second end of the primary plug housing. To make the primary plug housing assembly friendly, the primary plug housing may be divided in the axial direction in at least two parts, back part and front part, wherein the front part faces the electrical vehicle during the charging operation and the back part faces the charging cable. The first and the second throughout opening are preferably arranged in the back part. The charging plug can be mounted by pre-assembling the first and the second conductor end piece to the first and second conductor.

The first and the second conductor end piece are typically mounted in the respective throughout opening by inserting them before the first and the second charging contacts are mounted. To protect the mounted charging contacts, the front part, facing the electric vehicle during the charging operation, can be designed as an end cap, which closes and seals the back part and the charging contacts. The front part may comprise receiving spaces for housing sealing elements, which protect the mounted charging contacts from environmental influences. If appropriate, the front part and the back part of the primary plug housing can be divided along a parting plane, which is typically arranged perpendicular to the axial direction. The front part and the back part can be assembled via latching elements, which make the assembly possible even without the need for tools. The first and the second throughout openings can comprise a stop for the first and the second conductor end piece.

The first and the second conductor end piece can be mounted in the respective throughout opening with an anti-twist protection with respect to the axial direction, e.g. in form of protrusions in the first and the second throughout opening, which engage with recesses in the respective first and second conductor end piece in the mounted state. Depending on the design, the first and second charging plug can be mounted to the first and the second conductor end piece, when the first and the second conductor end piece are already mounted in the first and the second throughout opening. This allows that the first and second charging plug can be replaced without removing the first and the second conductor end piece with the thereto attached first and second conductor from the primary plug housing. To seal and protect the connection between the first and the second conductor end piece and the first and the second charging contact, an end cap can be mounted to the primary plug housing.

Given the high current of today's automotive charging applications, an effective cooling of the plug and in particular the charging contacts is crucial to avoid the charging contacts being welded to plug contacts of a corresponding socket during the charging operation. To cool the first and the second conductor and the first and the second conductor end pieces with thereto interconnected first and second charging contacts, the first and the second conductor end piece can each comprise at least one cooling surface which is during operation exposed to a circulating cooling agent. The cooling surface is typically fluidly interconnected to a respective cladding tube surrounding the first or the second conductor for conducting the circulating cooling agent along the first or the second conductor.

Typically, a cooling agent, e.g. a transformer oil, circulates between the charging station and the charging plugs. To guide the cooling agent between the charging plug and a charging station, the first or the second conductor are each typically encompassed by a cladding tube which is radially spaced a certain distance apart from the respective conductor, such that a cooling agent can be passed along the respective conductor. In a preferred variation, each cladding tube is separately interconnected to the primary plug housing in a fluid tight manner. Good results can be achieved, when each cladding tube is terminated by a terminating sleeve, which is in a mounted position arranged at least partially inside the primary plug housing in a fluid tight manner. The terminating sleeve can be an insert to which an end of the cladding tube is attached and which is at least partially inserted into the respective throughout opening. The insert may comprise a sealing means which in a mounted state seals the throughout opening in a fluid tight manner. The terminating sleeve can comprise a collar and a clamping element, wherein the cladding tube is clamped to the collar by the clamping element.

The cooling circuit can be established by either guiding the cooling agent in one direction through the cladding tube of the first or the second conductor and reverse via the cladding tube of the other conductor or by using a feeding tube. The feeding tube may be interconnected to the primary plug housing for conducting the circulating cooling agent in the opposite direction with respect to the cladding tubes. The feeding tube may be connected to the primary plug housing, which can comprise at least one passage for transferring the circulating cooling agent between the cooling surface of the first and the second conductor end piece and the feeding tube. The first and the second throughout opening can be fluidically interconnected with each other via the at least one passage. The respective conductor, respective conductor end piece and the terminating sleeve can form a connection unit, which can be pre-assembled and arranged in the respective throughout opening. The connection unit can comprise sealing elements at both ends, to seal the respective throughout opening in a fluid tight manner. The cooling surface of the first or second conductor end piece can encompass the end of the respective conductor and extend along the axial direction.

To monitor the temperature and avoid critical temperature levels of the charging contacts, the first and/or the second conductor end piece and/or the first and/or the second charging contact may be interconnected to a thermal sensor. The thermal sensor can be arranged in a recess of the first and/or the second conductor end piece and/or the first and the second charging contact, close to a respective contact surface of the charging contacts. The thermal sensor is usually electrically interconnected to an electronic device. The electronic device, e.g. in form of a printed circuit board with thereon arranged components, can be arranged in the primary plug housing. The primary plug housing may therefore comprise a chamber in which the electronic device is arranged. The chamber may be arranged above or below the first and the second throughput opening and preferably extends in the axial direction. To electrically connect the at least one thermal sensor to the electronic device by a cable, an opening may be foreseen in the primary plug housing.

For monitoring the charging operation, a charging plug may comprise at least one auxiliary and/or monitoring contact, which are interconnected to the electronic device and extend parallel to the first and the second charging contact. Said contacts are preferably axially offset and protrude above the charging contacts such that they make contact with the electronics of the car before the charging contacts. If they are placed at the same height on the board, one must have a longer socket. A particularly compact design may be obtained when the chamber extends in the axial direction and the electronic device comprises a printed circuit board to which the at least one auxiliary or monitoring contact is attached, protruding above a front end of the printed circuit board. Usually more than one auxiliary or monitoring contact is required. Several auxiliary contacts may be attached to the printed circuit board on at least two vertical levels with respect to the printed circuit board.

The charging plug and the charging cable are typically assembled together via a cable gland, forming a charging assembly. A preferred variation of the charging plug for a cable assembly according to the disclosure comprises a primary plug housing encompassed by a secondary plug housing as described hereinabove and hereinafter. The primary plug housing which comprises a first throughout opening in which a first conductor end piece is arranged. The first conductor end piece is attached to the end of a first conductor of the charging cable and comprises opposite to the first conductor a first charging contact extending in an axial direction. The primary plug housing further comprises a second throughout opening, in which a second conductor end piece is arranged. It is attached to the end of a second conductor of the charging cable and comprises opposite to the second conductor a second charging contact being laterally spaced apart from and extending parallel to the first charging contact in the axial direction.

The primary plug housing comprises with respect to the axial direction a front part and a back part assembled to each other in the axial direction. The secondary plug housing comprises a first and a second half-shell assembled to each other essentially perpendicular to the axial direction. In the shown variation, a charging cable enters the secondary plug housing by a cable gland arranged at the rear end of the secondary plug housing. The cable gland may be clamped between the half-shells of the secondary plug housing or attached to it otherwise. The interface element may be interconnected to the primary plug housing by at least one screw which in an assembled position is not visible from the outside of the charging plug.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: A first variation of the charging plug for the charging assembly from the front and above;
- Fig. 2: The first variation of the charging plug according to Figure 1 from the front and above in an exploded manner;
- Fig. 3: The first variation of the charging plug according to Figure 1 from the back and above in an exploded manner from a first side;
- Fig. 4: The first variation of the charging plug according to Figure 1 from the back and above in an exploded manner from a second side;
- Fig. 5: The primary plug housing of the first variation of the charging plug according to Figure 1 from the front and above in a partially sectionized manner;
- Fig. 6: The components mounted in the primary plug housing according to Figure 5 from the front and above in a partially sectionized manner;
- Fig. 7: The electronic device according to Figure 6 from the front and above;
- Fig. 8: The primary plug housing according to Figure 5 in a rear view.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

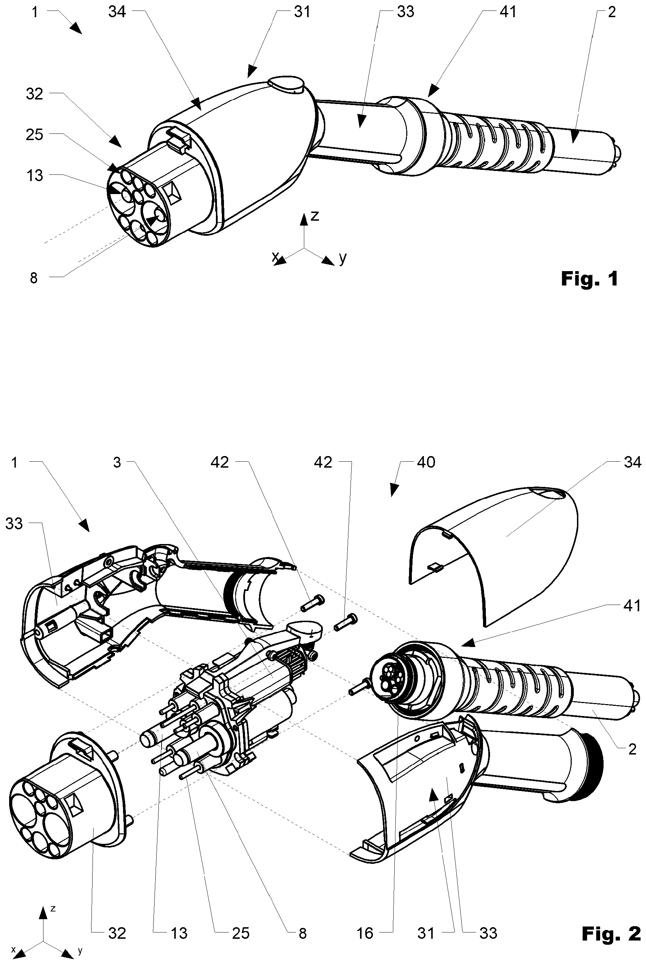

**Figure 1** shows a first variation of the charging plug 1 for the charging assembly 40 from the front and above. The shown charging plug 1 is arranged at the end of a charging cable 2 for connecting a charging station to an automotive vehicle. As can be obtained from **Figure 2****,** showing the first variation of the charging plug 1 from the front and above in an exploded manner, the charging plug 1 comprises a primary plug housing 3 (inner housing), which is encompassed by a secondary plug housing 31 (outer housing) which protects the primary plug housing 3 from outside influences. The secondary plug housing 31 particularly protects the primary plug housing 3 from mechanical impacts and vandalism. As can be obtained, the secondary plug housing 31 is assembled in a manner which still allows access to primary plug housing 3 and therefore enables onsite maintenance for changing components of the charging plug 1.

The shown secondary plug housing 31 comprises an interface element 32 for inserting the charging plug 1 into an automotive vehicle and at least two half-shells 33 forming the outer contour of the charging plug 1. The primary plug housing 3 is encompassed by the two half-shells 33 which are assembled along a parting plane. To prevent unwanted access to the core components of the charging plug 1, the half-shells 33 are covered by a cover 34 which covers the connection elements, in the shown variation screws. To obtain a compact design of the overall charging plug 1, the primary plug housing 3 is typically the core element of the charging plug 1 and typically extends in the axial direction.

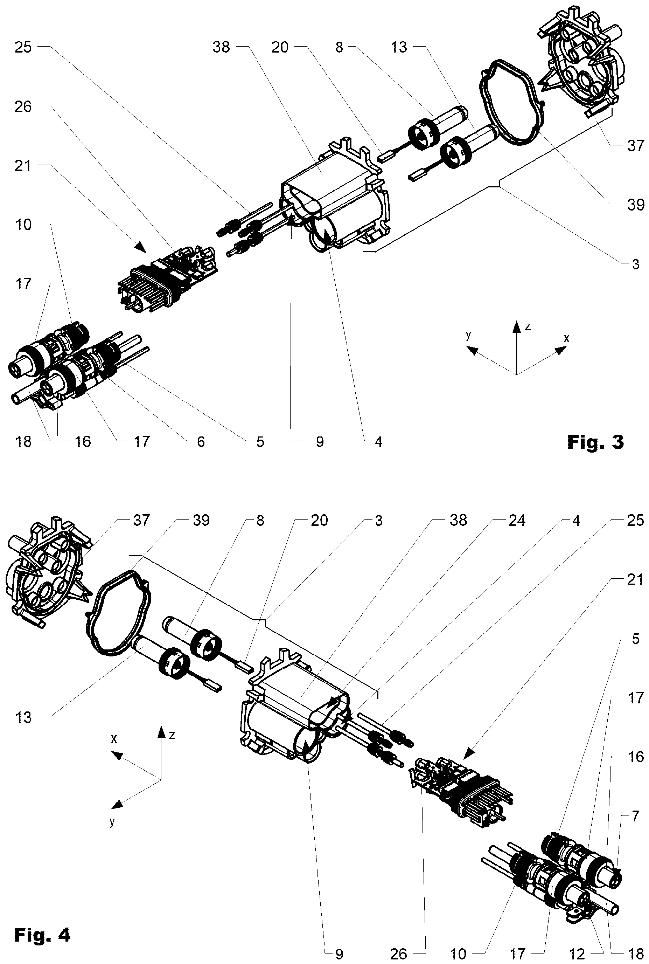

**Figure 3** shows the first variation of the charging plug 1 from the back and above in an exploded manner from a first side and **Figure 4** shows the first variation of the charging plug 1 from the back and above in an exploded manner from a second side. To provide a dense and assembly friendly design, the shown primary plug housing 3 comprises a first throughout opening 4 in which a first conductor end piece 5 is arranged, which is attached to the end 6 of a first conductor 7 of the charging cable 2. The first conductor end piece 5 comprises opposite to the first conductor 7 a first charging contact 8, which extends in an axial direction. The primary plug housing 3 of the shown variation further comprises a second throughout opening 9 in which a second conductor end piece 10 is arranged, which is attached to the end 11 of a second conductor 12 of the charging cable 2. The shown second conductor end piece 10 comprises opposite to the second conductor 12 a second charging contact 13, which is laterally spaced apart from and extends parallel to the first charging contact 8 in the axial direction.

The first and the second charging contacts 8, 13 are attached as separate parts to the first and or the second conductor end piece 5, 10. The first and the second conductor 7, 12 are attached to the first and the second conductor end pieces 5, 10. The first and the second conductor end piece 5, 10 comprise a receiving space for receiving the end 6, 11 of the respective conductor 7, 12. For establishing an electrical connection between the first and the second conductor 7, 12 and the first and the second conductor end piece 5, 10, the respective conductor end piece 5, 10 is attached to the conductor 7, 12 by a crimp connection which at the same time functions as a strain relief for the conductor 7, 12.

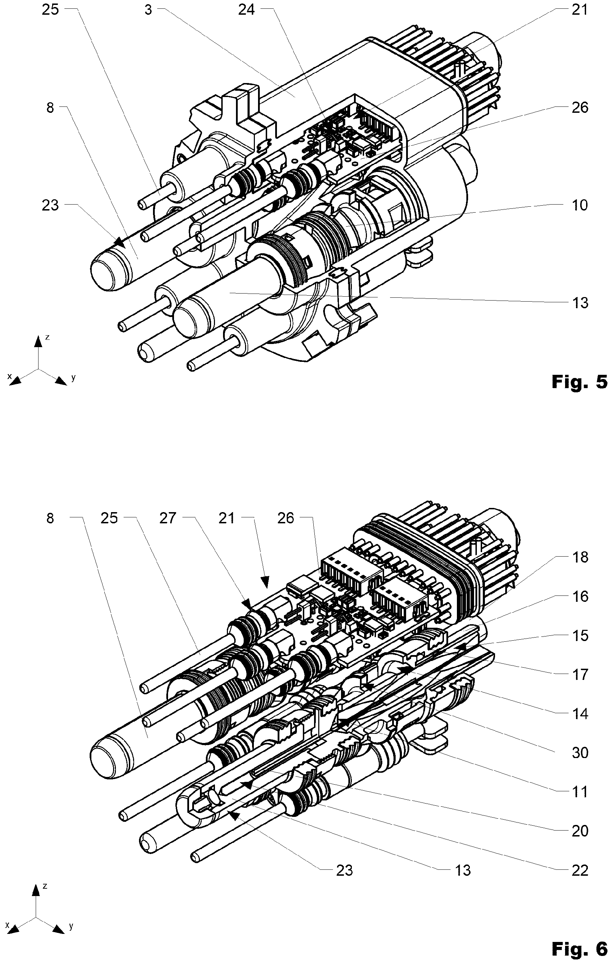

**Figure 5** shows the primary plug housing 3 of the first variation of the charging plug 1 from the front and above in a partially sectionized manner. The charging plug 1 is mounted by pre-assembling the first and the second conductor end piece 5, 10 to the first and second conductor 7, 12. The first and the second conductor end piece 5, 10 are mounted in the respective throughout opening 4, 9 by inserting them. Depending on the design, the first and second charging contact 8, 13 are mounted to the first and the second conductor end piece 5, 10, when the first and the second conductor end piece 5, 10 are already mounted in the first and the second throughout opening 4,9. This allows that the first and second charging contact 8, 13 can be replaced without removing the first and the second conductor end piece 5, 10 with the thereto attached first and second conductor 7, 12 from the primary plug housing 3.

To seal and protect the connection between the first and the second conductor end piece 5, 10 and the first and the second charging contact 8, 13, an end cap is mounted in the shown variation to the primary plug housing 3. The shown primary plug housing 3 further comprises a chamber 24 in which the electronic device 21 is arranged. The shown chamber 24 is arranged above the first and the second throughput opening 4, 9 and extends along the axial direction. To electrically connect the thermal sensor 20 to the electronic device 21, a passage 19 is arranged in the primary plug housing 3.

**Figure 6** shows the components mounted in the primary plug housing 3 from the front and above in a partially sectionized manner. To monitor the temperature and avoid critical temperature levels of the first and the second charging contact 8, 13, the first and/or the second conductor end piece 5, 10 and/or the first and/or the second charging contact 8, 13 are interconnected to a thermal sensor 20. The thermal sensor 20 of the shown variation is arranged in a recess 22 of the first and the second conductor end piece 5, 10 and/or the first and the second charging contact 8, 13, close to a respective contact surface 23 of the charging contacts 8, 13. The thermal sensor 20 is electrically interconnected to the electronic device 21.

Given the high current of today's automotive charging applications, an effective cooling of the charging plug 1 and in particular the charging contacts 8, 13 is crucial to avoid the charging contacts 8, 13 being welded to plug contacts of a corresponding socket during the charging operation. To cool the first and the second conductor 7, 12 and the first and the second conductor end pieces 5, 10 with thereto interconnected first and second charging contacts 8, 13, the first and the second conductor end piece 5, 10 each comprise at least one cooling surface 14 which is during operation exposed to a circulating cooling agent 15.

The cooling surface 14 is fluidly interconnected to a respective cladding tube 16 surrounding the first or the second conductor 7, 12 for conducting the circulating cooling agent 15 along the first or the second conductor 7, 12. Typically, a cooling agent 15, e.g. a transformer oil, circulates between the charging station and the charging plug 1. To guide the cooling agent 15 between the charging plug 1 and a charging station, the first or the second conductor 7, 12 are each encompassed by a cladding tube 16 such that the cooling agent 15 can be passed along the respective conductor 7, 12. Each cladding tube 16 is interconnected to the primary plug housing 3 in a fluid tight manner. The cladding tube 16 is terminated by a terminating sleeve 17, which is in a mounted position arranged at least partially inside the primary plug housing 3.

The terminating sleeve 17 is designed as an insert to which an end of the cladding tube 16 is attached and which is at least partially inserted into the respective throughout opening 4, 9. The insert shown comprises a sealing means which in a mounted state seals the throughout opening 4, 9 in a fluid tight manner. The terminating sleeve 17 of the shown variation comprises a collar and a clamping element, wherein the cladding tube 16 is clamped to the collar by the clamping element. The cooling circuit can be established by either guiding the cooling agent 15 in one direction through the cladding tube 16 of the first or the second conductor 7, 12 and reverse via the cladding tube 16 of the other conductor 7, 12 or by using an feeding tube 18. The feeding tube 18 is in the shown variation interconnected to the primary plug housing 3 for conducting the circulating cooling agent 15 in the opposite direction with respect to the cladding tubes 16. The feeding tube 18 is connected to the primary plug housing 3, which comprises at least one passage 19 for transferring the circulating cooling agent 15 between the cooling surface 14 of the first and the second conductor end piece 5, 10 and the feeding tube 18. The first and the second throughout opening 4, 9 are fluidically connected with each other via the at least one passage 19.

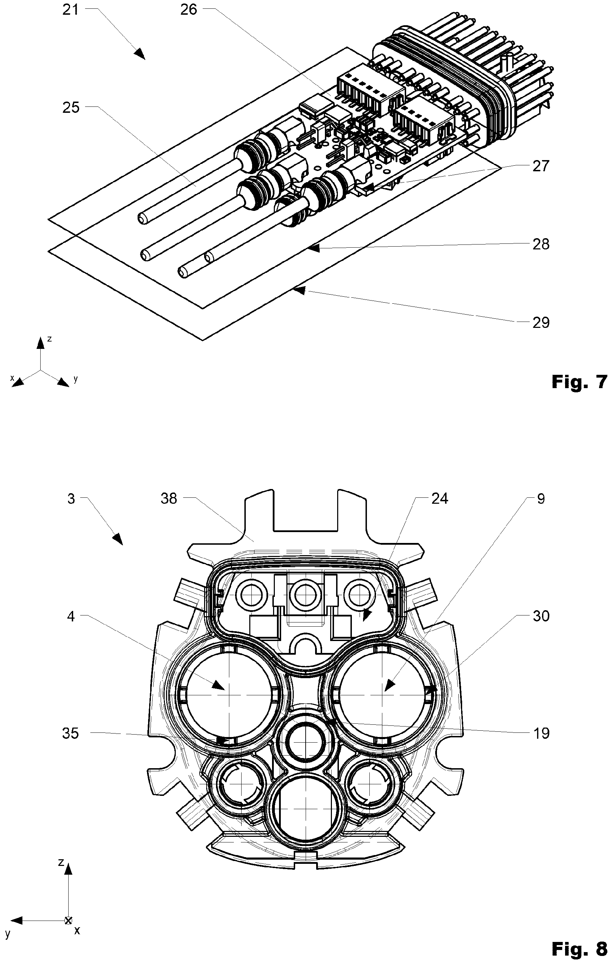

**Figure 7** shows the electronic device 21 from the front and above. For monitoring the charging operation, auxiliary and monitoring contacts 25 are interconnected to the electronic device 21. To achieve an even more compact design of the charging plug 1, the electronic device 21, e.g. in form of a printed circuit board 26 with thereon arranged components, is arranged in the primary plug housing 3. The shown auxiliary or monitoring contacts 25 are interconnected to the electronic device 21 and extend parallel to the first and the second charging contact 8, 13. The shown variation of the primary plug housing 3 is obtained as the chamber 24 extends in the axial direction and the electronic device 21 and comprises a printed circuit board 26 to which the auxiliary or monitoring contacts 25 are attached, protruding above a front end of the printed circuit board 26. For many applications more than one auxiliary or monitoring contact 25 is required. The auxiliary or monitoring contacts 25 are attached to the printed circuit board 26 on at least two vertical levels 28, 29 with respect to the printed circuit board 26.

**Figure 8** shows the primary plug housing 3 in a rear view. The shown primary plug housing 3 is made as an injection molded part, comprising several compartments for housing electronic components and the charging elements. The shown first and the second throughout opening 4, 9 are designed as essentially tubular openings extending from a first end to a second end of the primary plug housing 3. The first and the second conductor end piece 5, 10 are mounted in the respective throughout opening 4, 9 with an anti-twist protection 30 with respect to the axial direction. The anti-twist protection 30 of the shown variation comprises protrusions 35 arranged in the first and the second throughout opening 4, 9, which engage with recesses 36 in the respective first and second conductor end piece 5, 10 in the mounted state.

As best visible in **Figure 1** a preferred variation of charging assembly 40 according to the disclosure comprises a charging plug 1 comprising a primary plug housing 3 encompassed by a secondary plug housing 31 as described hereinabove. The primary plug housing 3 comprises a first throughout opening 4 in which a first conductor end piece 5 is arranged. The first conductor end piece 5 is attached to the end 6 of a first conductor 7 of the charging cable 2 and comprises opposite to the first conductor 7 a first charging contact 8 extending in an axial direction x. In a second throughout opening 9 a second conductor end piece 10 is arranged. It is attached to the end 11 of a second conductor 12 of the charging cable 2 and comprises opposite to the second conductor 12 a second charging contact 13 being laterally spaced apart from and extending parallel to the first charging contact 8 in the axial direction x. The primary plug housing 3 comprises with respect to the axial direction x a front part 37 and a back part 38 assembled to each other in the axial direction x. The secondary plug housing 31 comprises a first and a second half-shell 33 assembled to each other essentially perpendicular to the axial direction x. In the shown variation, a charging cable 2 enters the secondary plug housing 31 by a cable gland 41 arranged at the rear end of the secondary plug housing 31. The cable gland 41 may be clamped between the half-shells 33 of the secondary plug housing 31 or attached to it otherwise. The interface element 32 may be interconnected to the primary plug housing 3 by at least one screw 42 which in an assembled position is not visible from the outside of the charging plug 1.

Rather, the words used in the specification are words of description rather than limitation, and it is understood that various changes may be made without departing from the scope of the disclosure.

### LIST OF DESIGNATIONS

- 1: Charging plug
- 2: Charging cable
- 3: Primary plug housing
- 4: First throughout opening
- 5: First conductor end piece
- 6: End (First conductor)
- 7: First conductor
- 8: First charging contact
- 9: Second throughout opening
- 10: Second conductor end piece
- 11: End (Second conductor)
- 12: Second conductor
- 13: Second charging contact
- 14: Cooling surface
- 15: Cooling agent
- 16: Cladding tube
- 17: Terminating sleeve
- 18: Feeding tube
- 19: Passage
- 20: Thermal sensor
- 21: Electronic device
- 22: Recess
- 23: Contact surface
- 24: Chamber (primary plug housing)
- 25: Auxiliary/ monitoring contact
- 26: Printed circuit board (PCB)
- 27: Front end (PCB)
- 28: First vertical level (PCB)
- 29: Second vertical level (PCB)
- 30: Anti-twist protection
- 31: Secondary plug housing
- 32: Interface element
- 33: Half-shells
- 34: Cover
- 35: Protrusion
- 36: Recess
- 37: Front part (primary housing)
- 38: Back part (primary housing)
- 39: Seal (primary housing)
- 40: Charging assembly
- 41: Cable gland
- 42: Screw

## Claims

1. A charging assembly (40) comprising a charging plug (1) and a charging cable (2), for connecting a charging station to the battery of an electric vehicle, wherein the charging plug (1) comprises a primary plug housing (3) which comprises
a. a first throughout opening (4) in which a first conductor end piece (5) is arranged, which is attached to the end (6) of a first conductor (7) of the charging cable (2) and comprises opposite to the first conductor (7) a first charging contact (8) extending in an axial direction (x);
b. a second throughout opening (9) in which a second conductor end piece (10) is arranged, which is attached to the end (11) of a second conductor (12) of the charging cable (2) and comprises opposite to the second conductor (12) a second charging contact (13) being laterally spaced apart from and extending parallel to the first charging contact (8) in the axial direction (x), wherein
c. the first and the second conductor end piece (5, 10) each comprise at least one cooling surface (14) being during operation exposed to a circulating cooling agent (15), which cooling surface (14) is fluidly interconnected to a respective cladding tube (16) surrounding the first or the second conductor (7, 12) for conducting the circulating cooling agent (15) along the first or the second conductor (7, 12).

2. The charging assembly (40) according to claim 1, **wherein** each cladding tube (16) is interconnected to the primary plug housing (3) in a fluid tight manner and each cladding tube (16) is terminated by a terminating sleeve (17) which is in a mounted position arranged at least partially inside the primary plug housing (3).

3. The charging assembly (40) according to at least one of claims 1 or 2, **wherein** a feeding tube (18) is interconnected to the primary plug housing (3) for conducting the circulating cooling agent (15) in the opposite direction with respect to the cladding tubes (16).

4. The charging assembly (40) according to claim 3, **wherein** the primary plug housing (3) comprises at least one passage (19) for transferring the circulating cooling agent (15) between the cooling surface (14) of the first and the second conductor end piece (5, 10) and the feeding tube (18).

5. The charging assembly (40) according to claim 4, **wherein** the first and the second throughout opening (4, 9) are fluidically connected with each other via the at least one passage (19).

6. The charging assembly (40) according to at least one of the preceding claims, **wherein** the first and the second charging contact (8, 13) are attached as a separate part to the first and or the second conductor end piece (5, 10).

7. The charging assembly (40) according to at least one of the preceding claims, **wherein** the first and/or the second conductor end piece (5, 10) and/or the first and/or the second charging contact (8, 13) are interconnected to a thermal sensor (20) which is electrically interconnected to an electronic device (21) by an opening in the primary plug housing (3).

8. The charging assembly (40) according to claim 7, **wherein** a thermal sensor (20) is arranged in a recess (22) of the first and/or the second conductor end piece (5, 10) and/or the first and the second charging contact (8, 13) close to a respective contact surface (23).

9. The charging assembly (40) according to claim 7 or 8, **wherein** the primary plug housing (3) comprises a chamber (24) in which the electronic device (21) is arranged.

10. The charging assembly (40) according to at least one of claims 7 to 9, **wherein** at least one auxiliary and/or monitoring contact (25) is interconnected to the electronic device (21) and extends parallel to the first and the second charging contact (8, 13).

11. The charging assembly (40) according to claim 9 or 10, **wherein** the chamber (24) extends in the axial direction (x) and the electronic device (21) comprises a printed circuit board (26) to which the at least one auxiliary contact (25) is attached, protruding above a front end (27) of the printed circuit board (26).

12. The charging assembly (40) according to claim 11, **wherein** several auxiliary contacts (25) are attached to the printed circuit board (26) on at least two vertical levels (28, 29) with respect to the printed circuit board (26).

13. The charging assembly (40) according to at least one of the preceding claims, **wherein** the first and the second conductor end piece (5, 10) are mounted in the respective throughout opening (4, 9) with an anti-twist protection (30) with respect to the axial direction (x).

14. The charging assembly (40) according to at least one of the preceding claims, **wherein** the primary plug housing (3) is at least partially encompassed by a secondary plug housing (31) which protects the primary plug housing (3) from outside influences.

15. The charging assembly (40) according to claim 14, **wherein** in the mounted state the secondary plug housing (31) fixates the first and the second conductor end piece (5, 10) and/or the respective terminating sleeve (17) in position within the first and the second throughout opening (4, 9) along the axial direction (x).

16. The charging assembly (40) according to claim 14 or 15, **wherein** the secondary plug housing (31) comprises an interface element (32) for inserting the charging plug (1) into an automotive vehicle and at least two half-shells (33) forming the outer contour of the charging plug (1).

17. A charging plug (1) for a charging assembly (40) according to at least one of the preceding claims, comprising a primary plug housing (3) encompassed by a secondary plug housing (31), wherein
a. the primary plug housing (3) comprises
i. a first throughout opening (4) in which a first conductor end piece (5) is arranged, which is attached to the end (6) of a first conductor (7) of the charging cable (2) and comprises opposite to the first conductor (7) a first charging contact (8) extending in an axial direction (x), and
ii. a second throughout opening (9) in which a second conductor end piece (10) is arranged, which is attached to the end (11) of a second conductor (12) of the charging cable (2) and comprises opposite to the second conductor (12) a second charging contact (13) being laterally spaced apart from and extending parallel to the first charging contact (8) in the axial direction (x), wherein
b. the primary plug housing (3) comprises with respect to the axial direction (x) a front part (37) and a back part (38) assembled to each other in the axial direction (x); and
c. the secondary plug housing (31) comprises a first and a second half-shell (33) assembled to each other essentially perpendicular to the axial direction (x).

18. The charging plug (1) according to claim 17, **wherein** the charging cable (2) enters the secondary plug housing (31) by a cable gland (41) arranged at the rear end of the secondary plug housing (31), in particular a cable gland (41) which is clamped between the half-shells (33) of the secondary plug housing (31).

19. The charging plug (1) according to claim 18, **wherein** the cable gland (41) is clamped between the half-shells (33) of the secondary plug housing (31) and attached by a union nut.

20. The charging plug (1) according to at least one of claims 17 to 19, **wherein** an interface element (32) is interconnected to the primary plug housing (3) by at least one screw (42) which in an assembled position covered and therefore not visible from the outside of the charging plug (1).
